Europäisches Patentamt

European Patent Office

Office européen des brevets

(19)

(11) Veröffentlichungsnummer: **0 071 956**
**A1**

(12) # EUROPÄISCHE PATENTANMELDUNG

(21) Anmeldenummer: **82106994.5**

(22) Anmeldetag: **03.08.82**

(51) Int. Cl.³: **H 02 H 7/24,** H 02 H 3/10,
H 01 H 9/14, H 01 T 1/14

(30) Priorität: **06.08.81 AT 3461/81**

(43) Veröffentlichungstag der Anmeldung: **16.02.83**
**Patentblatt 83/7**

(84) Benannte Vertragsstaaten: **BE CH DE FR GB IT LI NL SE**

(71) Anmelder: **BROWN, BOVERI & CIE Aktiengesellschaft,
Kallstadter Strasse 1, D-6800 Mannheim 31 (DE)**

(72) Erfinder: **Biegelmeier, Gottfried, Prof. Ing. Dr. phil.,
Heiligenstädterstrasse 187, A-1190 Wien (AT)**

(74) Vertreter: **Kempe, Wolfgang, Dr. et al, c/o Brown, Boveri
& Cie AG Postfach 351, D-6800 Mannheim 1 (DE)**

(54) **Installationsgerät.**

(57) Ein Installationsgerät besitzt einen Überspannungs-ableiter mit einer Funkenstrecke (1) und einer der Funkenstrecke zugeordneten Lichtbogenlöschkammer (2), sowie eine Trennvorrichtung mit einem Betätigungsorgan (3) oder einem optischen Schaltstellungsanzeiger, einem Schaltschloss (4) mit oder ohne Freiauslösung, einem Kontaktapparat (5) mit einer weiteren, dem Kontaktapparat zugeordneten Lichtbogenlöschkammer, Überstromauslösern (6, 7) und ggf. einem strombegrenzenden Widerstand (8). Die Trennvorrichtung kann als Leitungsschutzschalter ausgebildet sein. Die genannten Bauteile sind in einem gemeinsamen Gehäuse (11a, 11b) untergebracht, das auch Anschlussklemmen (12, 13) für wenigstens einen aktiven Leiter und für die Erdung aufweist. Damit nicht bei jedem Ansprechen der Funkenstrecke (1) die Trennvorrichtung ausgelöst wird, erfolgt der Auslösevorgang durch den elektromagnetischen Schnellauslöser (7) zeitverzögert, und zwar um vorzugsweise mehr als 5 Millisekunden. Das Installationsgerät kann optimal im Hausanschlusskasten oder im Zählerverteiler der Verbraucheranlage eingesetzt werden und dient dort zur Ableitung von atmosphärischen Überspannungen.

EP 0 071 956 A1

B R O W N , B O V E R I  &  C I E          AKTIENGESELLSCHAFT
Mannheim                                   1. April 1982
Mp.-Nr. 524/82                             ZPT/P4-Ft/Ht

## Installationsgerät

Die Erfindung betrifft ein Installationsgerät mit einem Überspannungsableiter mit einer Funkenstrecke und einer der Funkenstrecke zugeordneten Lichtbogenlöschkammer und einer Trennvorrichtung mit Betätigungsorgan oder optischem Schaltstellungsanzeiger, Schaltschloß mit oder ohne Freiauslösung, Kontaktapparat mit einer weiteren, dem Kontaktapparat zugeordneten Lichtbogenlöschkammer und Überstromauslösern, und gegebenenfalls mit einem strombegrenzenden Widerstand, wobei die genannten Bauteile in einem gemeinsamen Gehäuse angeordnet sind, das auch Anschlußklemmen für wenigstens einen aktiven Leiter und für die Erdung aufweist.

Infolge des stetigen Ansteigens der indirekten Blitzschäden in den Verbraucheranlagen gewinnen die Schutzmaßnahmen gegen Überspannungen zunehmend an Bedeutung. Dafür wurden bisher Überspannungsableiter, in der Folge kurz Ableiter genannt, verwendet, die aus einer Serienschaltung einer Funkenstrecke und einem spannungsabhängigen Widerstand bestehen. Der spannungsabhängige Widerstand dient dabei zur Unterbrechung des nachfließenden Betriebsstromes aus dem Netz, nachdem der Ableiter den hohen Blitzstrom zur Erde abgeleitet hat.

Die Ableiter wurden bisher meistens in den Freileitungen eingebaut. Die Erfahrung hat aber gezeigt, daß der Schutz der Freileitungen mit Ableitern nicht genügt, um die elektrischen Betriebsmittel in den Verbraucheranlagen zuverlässig gegen Blitzstrom-Wanderwellen aus dem Freileitungsnetz zu schützen. Wahrscheinlich ist dies daduch bedingt, daß die Ableiter in den Freileitungen oft nicht genügend gut geerdet oder in zu geringem Umfang eingesetzt werden. Dazu kommt noch, daß die Ableiter bei direkten Blitzeinschlägen in die Leitung zerstört werden können. Da keine regelmäßigen Überprüfungen stattfinden, sind sie dann über längere Zeiträume hinweg nicht funktionsfähig, und die Anlage ist nicht mehr geschützt. Für einen zuverlässigen Überspannungsschutz der Verbraucheranlagen ist es daher notwendig, in der Verteilung oder beim Hausanschluß der Verbraucheranlage zusätzlich Ableiter vorzusehen.

Ableiter für Verbraucheranlagen müssen aber gegenüber Ableitern für Freileitungsnetze zusätzliche Eigenschaften besitzen, um die Sicherheit in der Verbraucheranlage zu gewährleisten.

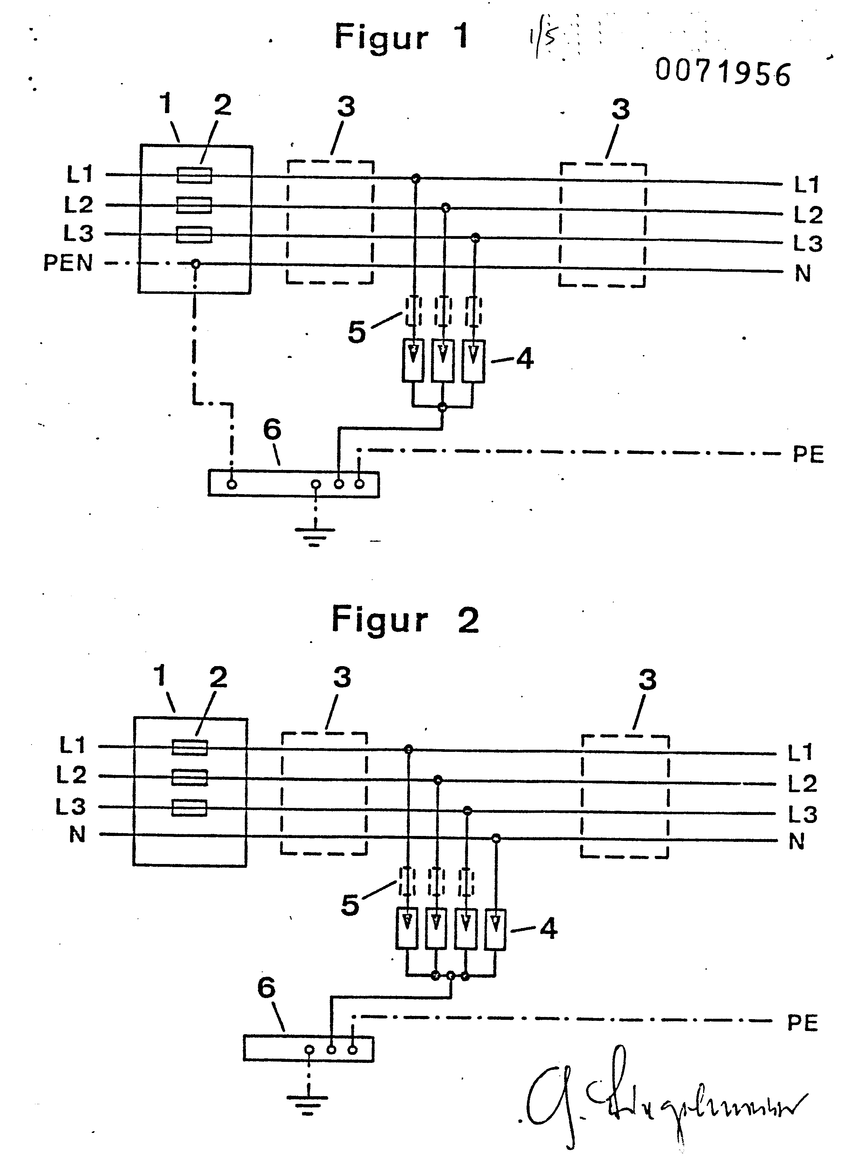

Zum besseren Verständnis seien zunächst die bekannten grundsätzlichen Schaltungen in Fig. 1 und 2 besprochen, deren Einsatz davon abhängt, ob in der Verbraucheranlage Nullung (Nullungsschutzschaltung) oder Schutzerdung (Fehlerstromschutzschaltung) als Schutzmaßnahme beim indirekten Berühren angewendet ist.

Bei der Nullung, deren Schutzpegel eventuell durch Fehlerstromschutzschalter 3 erhöht sein kann (Nullungsschutzschaltung), sind entsprechend Fig. 1 nur drei Ableiter 4 erforderlich, die zwischen die Außenleiter und eine Potentialausgleichsschiene 6 geschaltet werden. Die Potentialausgleichsschiene 6 ist im Hausanschlußkasten 1 mit dem PEN-Leiter verbunden. Werden zu den Ableitern 4 längere Anschlußleitungen kleineren Querschnittes verlegt, dann sind zusätzlich Leitungsschutzorgane 5 erforderlich. Die Ableiter enthalten meist noch eine Abtrennvorrichtung, die ansprechen soll, wenn der Ableiter durch eine zu hohe Blitzenergie zerstört wird. Versagt sie, dann sollen die Leitungsschutzorgane 5 noch einen zusätzlichen "back up"-Schutz bieten.

Bei der Schutzerdung und Fehlerstromschutzschaltung nach Fig. 2 ist die Schaltung ganz ähnlich, nur muß auch der neutrale Leiter über einen Ableiter mit der Pontentialausgleichsschiene verbunden werden. Die Fehlerstromschutzschalter 3 können bei beiden Schaltungen wahlweise vor oder hinter den Ableitern eingebaut werden, nur müssen bei Einbau vor dem Ableiter kurzverzögerte Fehlerstromschutzschalter verwendet werden, um ein Fehlauslösen beim ordnungsgemäßen Ansprechen der Ableiter zu vermeiden.

Die oben beschriebenen Lösungen mit einer getrennten Anordnung der Überstromschutzorgane und einer zusätzlichen Trennvorrichtung im Ableiter, die nur ein sehr begrenztes Schaltvermögen hat, sind nicht nur teuer, sondern besitzen auch sicherheitstechnische Nachteile. In Freileitungsnetzen kann ja ein explodierender Ableiter nur wenig Schaden anrichten, aber in einer Verteilung oder gar im Hausanschlußkasten einer Verbraucheranlage würde dies eine unmittelbare Lebens- und Brandgefahr darstellen. Außerdem kann nach dem Austausch des schadhaften Ableiters auf das Wiedereinschalten des getrennt montierten Überstromschutzorganes vergessen werden und damit würde der Überspannungsschutz wirkungslos.

Um hier Abhilfe zu schaffen, wurde bereits vorgeschlagen (AT-Patentanmeldung A 4260/80), die Technik des Ableiters mit der Technik des modernen Leitungsschutzes zu verbinden. Dazu wird ein Ableiter mit einer schaltbaren Trennvorrichtung verwendet, bestehend aus einer Funkenstrecke, einem spannungsabhängigen Widerstand und einer Trennvorrichtung mit Betätigungsorgan oder optischen Stellungsanzeigern, Schaltschloß mit oder ohne Freiauslösung, Kontaktappart mit Lichtbogenlöschkammer und Überstromauslösern. Diese Bauteile sind in einem gemeinsamen Gehäuse aus Isolierstoff angeordnet, das aus mehreren Teilen bestehen kann und das auch die Anschlußklemmen für den aktiven Leiter und die Erdungsleitung trägt.

Da der spannungsabhängige Widerstand den Betriebsstrom vom Netz nach Ableiten der Blitzenergie löschen muß, sind für seine untersten Werte Grenzen gesetzt und dies bedingt, daß auch beim Durchgang des Blitzstromes einige zehntel Ohm nicht unterschritten werden können. Damit bleibt aber die Restspannung des Ableiters bei einigen tausend Volt, da die Blitzströme leicht einige Kiloampere, ja sogar einige zehn Kiloampere erreichen können. Die Restspannung gefährdet aber die Isolation der Anlage und soll daher so gering als möglich gehalten werden. Auch die Energieumsetzung im Ableiter verlangt kleinste Durchgangswiderstände, wenn man anstrebt, daß die Ableiter auch bei Direkteinschlägen schützen sollen.

Neuerdings werden daher Ableiter vorgeschlagen, die keinen spannungsabhängigen Widerstand mehr besitzen. Beim Ansprechen wird durch die Funkenstrecke der Lichtbogen ausgeblasen und auch der nachfolgende Betriebsstrom durch eine entsprechende Ausbildung der Lichtbogenkammer ähnlich wie bei einem Leitungsschutzschalter gelöscht. Man könnte also meinen, daß in diesem Falle keine zusätzliche Schutzeinrichtung notwendig ist und das nächste, im Leitungszug vorgeschaltete Leitungsschutzorgan beim Versagen des Ableiters den Schutz des Ableiters übernehmen kann. Das ist aber aus folgenden Gründen nicht möglich.

Infolge der sehr stark schwankenden Energieinhalte der Blitzentladungen wird es nie möglich sein, die Ableiter so zu dimensionieren, daß alle Direkteinschläge gefahrlos abgeleitet werden. Es wird sich immer um ein statistisches Problem handeln, wie weit man die Sicherheit treibt, das heißt also, daß in Extremfällen immer Ableiter versagen werden und das vorgeschaltete Leitungsschutzorgan den "back-up"-Schutz übernehmen muß. In der Praxis ist dies die Hausanschlußsicherung, die in dem vom Elektrizitätsversorgungsunternehmen plombierten Hausanschlußkasten installiert ist. Ein Ansprechen verursacht also eine kostspielige Betriebsstörung. Außerdem sind die Kurzschlußströme im Netz je nach Einbaustelle des Ableiters verschieden, wobei besonders bei der Nullung (Fig. 1) jedes Ansprechen eines Ableiters einen Netzkurzschluß verursacht, so daß das selektive Abschalten des nachfließenden Betriebsstromes im Ableiter ein besonderes Problem darstellt.

Aufgabe der Erfindung ist es daher, diese Mißstände zu beseitigen.

Zu diesem Zweck wird ein Überspannungsableiter, dessen Funkenstrecke so ausgebildet ist, daß sie den nachfolgenden Betriebsstrom aus dem Netz löschen kann, mit einer kurzverzögerten Trennvorrichtung versehen, bei der der Auslösevorgang durch den elektromagnetischen Schnellauslöser zeitverzögert um vorzugsweise mehr als 5 Millisekunden erfolgt. Diese Trennvorrichtung ist in einem gemeinsamen Gehäuse, das auch aus mehreren Teilen bestehen kann, zusammen mit der in Serie geschalteten Funkenstrecke untergebracht. Für die kurzverzögerte Trennvorrichtung wird die vom Leitungsschutz her bekannte Technik verwendet, wobei auch noch zusätzliche Meldeeinrichtungen vorgesehen werden können (AT-PS 237 724 und AT-PA A 4260/80). Da bei jedem Ansprechen des Ableiters, insbesondere in genullten Anlagen, ein Netzkurzschluß entsteht, kann in dem gemeinsamen Gehäuse auch noch ein niederohmiger Widerstand zur Kurzschlußstrombegrenzung in Serie geschaltet sein. Es muß aber sichergestellt werden, daß durch den Netzkurzschlußstrom, der einige Millisekunden durch den Ableiter fließt, bevor er gelöscht wird, die schaltbare Trennvorrichtung nicht zum Ansprechen gebracht wird. Nur wenn die Löschung in der Funkenstrecke versagt, etwa durch Verschweißung und damit der Kurzschluß bestehen bleibt, muß die Trennvorrichtung den Ableiter vom Netz trennen.

Dies wird, wie oben angegeben, erfindungsgemäß dadurch erreicht, daß der elektromagnetische Schnellauslöser der Trennvorrichtung um mehr als fünf Millisekunden in der Auslösung verzögert wird.

Diese Kurzverzögerung kann dadurch erreicht werden, daß ein Bauteil für die Zeitverzögerung in Serie mit dem elektromagnetischen Schnellauslöser, dem thermischen Auslöser und einem ggf. vorhandenen strombegrenzenden Widerstand parallelgeschaltet wird. Dadurch wird der Schnellauslöser der Trennvorrichtung gesteuert. Im einfachsten Fall kann dieses Zeitverzögerungselement oder Bauteil für die Zeitverzögerung einen Bimetallkontakt ggf. in Serie mit einem Widerstand aufweisen, wobei nach Ansprechen des Bimetallkontaktes der elektromagnetische Schnellauslöser an die Parallelschaltung angeschlossen wird.

Eine besondere Ausgestaltung der Erfindung kann dahin gehen, daß das Gehäuse aus zwei Teilen besteht, wobei in einem Teil die Funkenstrecke mit der Lichtbogenlöschkammer untergebracht ist und der zweite Teil die kurzverzögete Trennvorrichtung enthält, daß die beiden Gehäuseteile durch leicht lösbare Verbindungen elektrisch und mechanisch miteinander verbunden sind.

In der Zeichnung Fig. 1 und Fig. 2 sind die beiden oben beschriebenen bekannten Schaltungsanordnungen gezeigt.

Die erfindungsgemäßen Ausgestaltungen sind in den Fig. 3 bis 6 dargestellt.

Es zeigt:

Fig. 3        ein Ausführungsbeispiel eines erfindungsgemäßen Installationsgerätes,

Fig. 4        eine Schaltungsanordnung zur Kurzverzögerung des Schnellauslösers der Anordnung gem. Fig. 3,

Fig. 5        die Ausbildung des Zeitverzögerungselementes als einfachen Bimetallkontakt und

Fig. 6        eine konstruktive Ausbildung des erfindungsgemäßen Installationsgerätes.

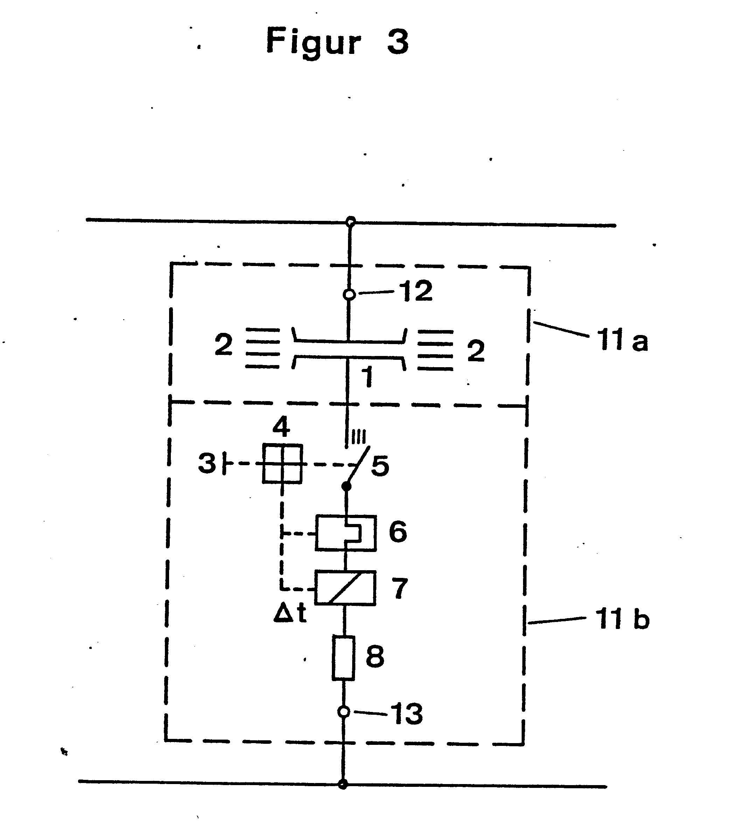

Die Schaltung des erfindungsgemäßen Installationsgerätes ist in der Fig. 3 dargestellt. Das Installationsgerät besitzt eine selbstlöschende Funkenstrecke 1, denen Lichtbogenlöschkammern 2 zugeordnet sind. In Serie zu der Funkenstrecke ist eine kurzverzögerte Trennvorrichtung geschaltet, die ein Betätigungsorgan oder einen Schaltstellungsanzeiger 3, ein Schaltschloß 4 mit oder ohne Freiauslösung, einen Unterbrecherkontakt 5, einen thermisch verzögerten Überstromauslöser 6 (beispielsweise einen Bimetallauslöser) und einen kurzschlußstrombegrenzenden Widerstand 8 aufweist, welch letzter auch weggelassen werden könnte. Zusätzlich zu dem thermisch verzögerten Überstromauslöser 6 ist ein Schnellauslöser 7 vorgesehen, der als elektromagnetischer Auslöser ausgebildet sein kann und in kurzverzögerter Bauform ausgeführt ist, welche Kurzverzögerung z. B. durch eine Öldämpfung erreicht werden kann und in der Fig. 3 durch die Bezeichnung $\Delta$ t angedeutet ist.

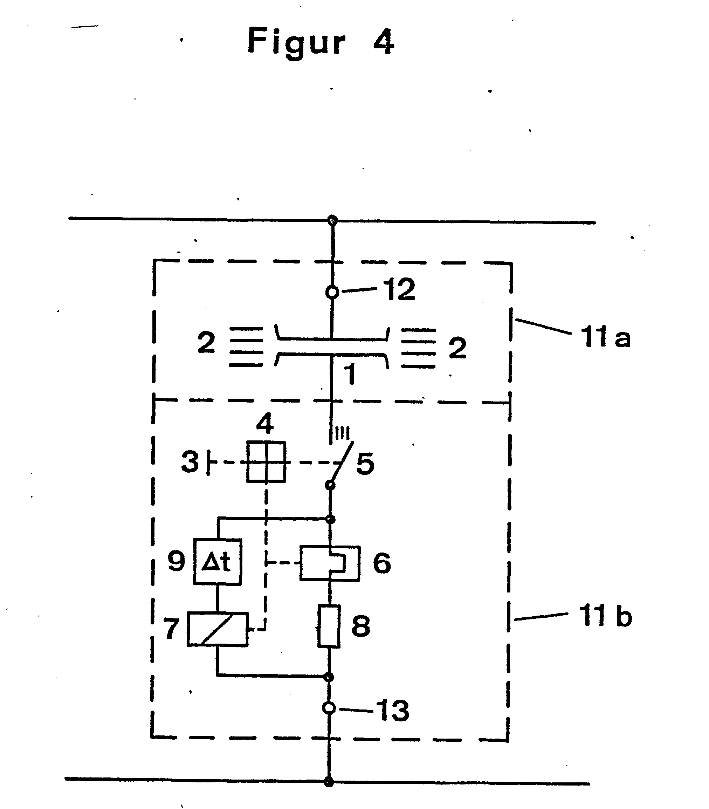

In der Fig. 4 ist ein Zeitverzögerungselement 9 in Reihe mit dem Schnellauslöser 7 geschaltet und beide Teile sind parallel zu dem thermischen Auslöser 6 und dem strombegrenzenden Widerstand 8 parallelgeschaltet.

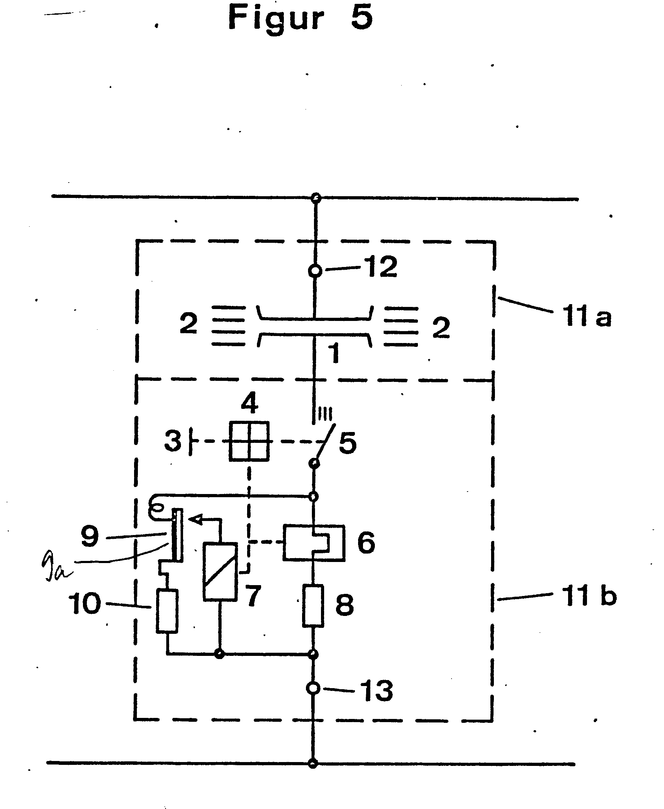

Bei der Ausgestaltung gem. Fig. 5 ist das Zeitverzögerungselement 9 als einfacher Bimetallkontakt 9a ausgebildet, der in Reihe mit einem Einstell- oder Justierwiderstand 10 liegt. Dabei befindet sich der Widerstand 10 zusammen mit dem Bimetallkontakt 9 parallel zu dem Schnellauslöser 7.

Das Gehäuse des Ableiters kann mehrteilig ausgeführt sein, etwa so, daß die kurzverzögerte Trennvorrichtung seitlich neben dem Gehäuse der Funkenstrecke sitzt und leicht demontiert werden kann. Verschweißt die Funkenstrecke, dann ist ein schnelles und billiges Auswechseln möglich.

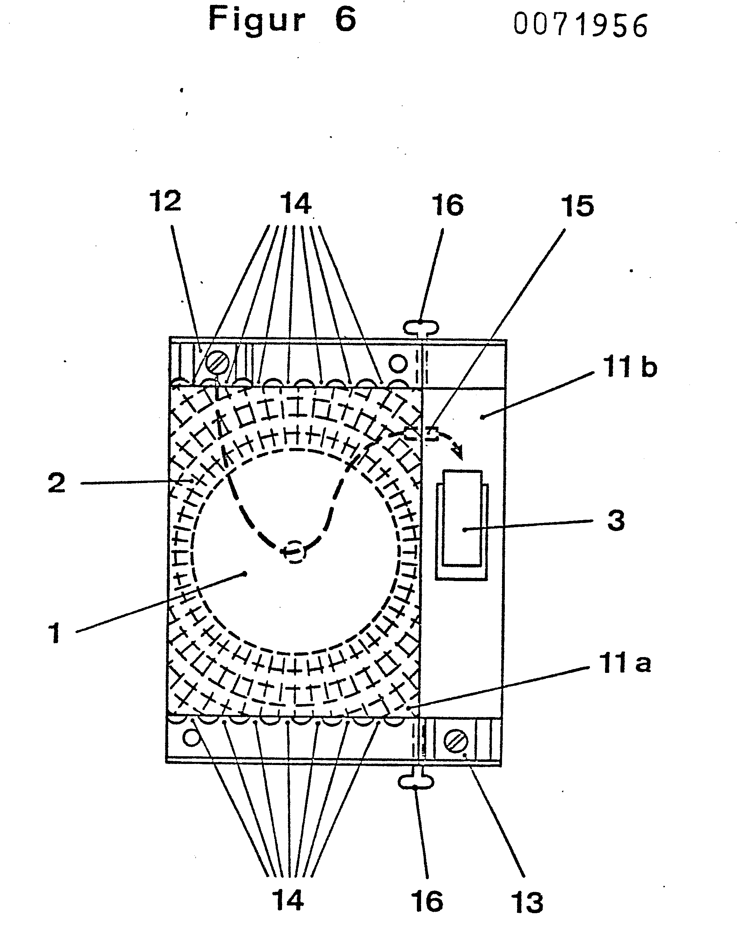

In der Fig. 6 ist eine konstruktive Zuordnung von Funkenstrecke zur Trennvorrichtung dargestellt. Die Funkenstrecke 1 ist in einem Gehäuseteil 11a untergebracht, in dem auch die netzartig aufgebaute Lichtbogenlöscheinrichtung 2 eingelegt ist. Das Gehäuseteil besitzt Austrittsöffnungen 14 für Lichtbogengase.

Die Trennvorrichtung ist in ein Gehäuseteil 11b eingesetzt, aus dem nach oben das Betätigungsorgan 3 herausragt. Dieser Gehäuseteil mit der Trennvorrichtung wird seitlich auf den Gehäuseteil 11a mit der Funkenstrecke aufgeschnappt oder durch eine andere lösbare Verbindung mit diesem verbunden.

Gemäß Fig. 6 sind hierzu zwei Klammern 16 vorgesehen, die beidseitig an den Längsflächen der beiden Gehäuseteile 11a und 11b, diese miteinander verbindend, eingesteckt sind. Die elektrische Verbindung zwischen der Funkenstrecke und der Trennvorrichtung kann, wie in der Fig. 6 angedeutet, durch einen Steckkontakt 15 erfolgen; es können natürlich auch andere, einen guten Kontakt vermittelnde, leicht lösbare Verbindungen vorgesehen werden. Der Gehäuseteil 11a trägt auch die Anschlußklemmen 12 für den aktiven Leiter und der Gehäuseteil 11b die Anschlußklemme 13 für die Erdleitung.

0071956

## Ansprüche

1. Installationsgerät mit einem Überspannungsableiter mit einer Funkenstrecke (1) und den Funkenstrecken zugeordneten Lichtbogenlöschkammern (2) und einer Trennvorrichtung mit Betätigungsorgan (3) oder optischem Schaltstellungsanzeiger, Schaltschloß (4) mit oder ohne Freiauslösung, Kontaktapparat (5) mit einer weiteren, dem Kontaktapparat zugeordneten Lichtbogenlöschkammer und Überstromauslösern (7, 6) und ggf. mit einem strombegrenzenden Widerstand (8), wobei die genannten Bauteile in einem gemeinsamen Gehäuse angeordnet sind, das auch Anschlußklemmen (12, 13) für wenigstens einen aktiven Leiter und für die Erdleitung aufweist, dadurch gekennzeichnet, daß der Auslösevorgang durch den elektromagnetischen Schnellauslöser (7) zeitverzögert um vorzugsweise mehr als 5 Millisekunden erfolgt.

2. Installationsgerät nach Anspruch 1, dadurch gekennzeichnet, daß ein Bauteil (9) für die Zeitverzögerung in Serie mit dem elektromagnetischen Schnellauslöser (7), dem thermischen Auslöser (6) und einem gegebenenfalls vorhandenen strombegrenzenden Widerstand (8) parallel geschaltet ist (Fig. 4).

3. Installationsgerät nach Anspruch 1 und 2, dadurch gekennzeichnet, daß das Bauteil (9) für die Zeitverzögerung aus einem Bimetallkontakt (9) gegebenenfalls in Serie mit einem Widerstand (10) besteht, wobei nach Ansprechen des Bimetallkontaktes (9) der elektromagnetische Schnellauslöser (7) an die Parallelschaltung angeschlossen wird
(Fig. 5).

4. Installationsgerät nach den Ansprüchen 1, 2 und 3,
dadurch gekennzeichnet, daß das Gehäuse aus zwei Teilen
(11a, 11b) besteht, wobei in einem Teil (11a) die Funkenstrecke (1) mit der Lichtbogenlöschkammer (2) untergebracht ist und der zweite Teil (11b) die kurzverzögerte
Trennvorrichtung enthält, und daß die beiden Gehäuseteile (11a, 11b) durch leicht lösbare Verbindungen (15, 16)
elektrisch und mechanisch miteinander verbunden sind
(Fig. 6).

# Figur 1

0071956

# Figur 2

Figur 3

# Figur 4

Figur 5

0071956

# Figur 6

0071956

0071956

**Europäisches
Patentamt**

**EUROPÄISCHER RECHERCHENBERICHT**

Nummer der Anmeldung

EP 82 10 6994

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | H 02 H 7/24 |
| Y | GB-A- 542 867 (BRITISH THOMSON-HOUSTON) * Seite 1, Zeilen 14-41, 50-59; Abbildung * | 1 | H 02 H 3/10 H 01 H 9/14 H 01 T 1/14 |
| | --- | | |
| Y,A | GB-A-2 010 613 (GENERAL ELECTRIC) * Seite 1, Zeile 116 - Seite 4, Zeile 19; Abbildungen 1-4 * | 1-4 | |
| | --- | | |
| A | FR-A- 812 674 (ALSTHOM) * Seite 2, Zeilen 66-99; Abbildung 1 * | 1 | |
| | --- | | |
| A | DE-B-1 077 313 (METROPOLITAN-VICKERS) * Spalte 1, Zeile 26 - Spalte 2, zeile 48; Abbildung * | 1 | RECHERCHIERTE SACHGEBIETE (Int. Cl. ³) |
| | --- | | |
| A | GB-A- 389 893 (ELECTRICAL IMPROVEMENTS) * Seite 1, Zeile 83 - Seite 2, Zeile 62; Abbildungen 1,2 * | 2,3 | H 02 H 7/00 H 02 H 3/00 H 02 H 9/00 H 01 H 9/00 H 01 H 83/00 H 01 T 1/00 |
| | --- | | |
| A | FR-A- 775 123 (PEREDA ELORDI) * Seite 1, Zeile 50 - Seite 2, Zeile 55; Abbildung 1 * | 2,3 | |
| | --- | | |
| E | EP-A-0 046 545 (BROWN-BOVERI) * Seite 10, Zeile 6 - Seite 11, Zeile 1; Abbildungen 3,4 * | 1,6 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 12-11-1982 | RUGGIU M.L.J.J. |